# EUROPÄISCHE PATENTSCHRIFT

(11) **EP 1 851 449 B1**
(45) Veröffentlichungstag und Bekanntmachung des Hinweises auf die Patenterteilung: **04.04.2018**
(21) Anmeldenummer: 06708244.6
(22) Anmeldetag: 14.02.2006
(51) Int. Cl.: F16B 39/30, F16B 25/10

(54) **GEWINDEELEMENT**
THREADED ELEMENT
ELEMENT DE FILETAGE

(30) Priorität: 25.02.2005 DE 102005008779
(43) Veröffentlichungstag der Anmeldung: 07.11.2007
(73) Patentinhaber: SFS intec Holding AG, 9435 Heerbrugg (CH)
(72) Erfinder: MAIR, Roland, 6840 Götzis (AT)
(86) Internationale Anmeldenummer: PCT/EP2006/050907
(87) Internationale Veröffentlichungsnummer: WO 2006/089849

(56) Entgegenhaltungen:
- DE-C- 35 515
- US-A- 1 963 536
- US-A- 2 232 337
- US-A- 2 562 516

## Beschreibung

Die vorliegende Erfindung betrifft ein Gewindeelement mit mindestens zwei das Gewinde kreuzenden Nuten, Kerben, Rillen od. dgl., wobei die Nuten, Kerben, Rillen od. dgl. in der Gewindeflanke wenigstens eine Gleitfläche bilden, die in einem stumpfen Winkel in die Gewindeflanke übergeht, und wobei die Nuten, Kerben, Rillen od. dgl. gegenüber dem Gewinde maximal die 25-fache Steigung, mit gleicher Drehrichtung, besitzen.

Solche Gewindeelemente sind für diverse Spezialanwendungen bekannt. Insbesondere ist aus der DIN 7513 eine Schneidschraube bekannt, die das Gewinde kreuzende Nuten, Kerben, Rillen od. dgl. aufweist. Diese verlaufen ungefähr achsparallel zur Mittelachse der Schraube und sind so ausgebildet, dass ein Schneiden des Gewindes ermöglicht wird. Gewindeelemente dieser Art werden in ausgeprägter Form auch für Gewindeschneid-Werkzeuge verwendet. Schrauben, die Gewindeelemente dieser Art aufweisen, sind völlig ungeeignet als Rückdrehsicherung.

Ein Gewindeelement der eingangs genannten Art ist aus dem Dokument US 2 562 516 A bekannt. Bei diesem bekannten Gewindeelement handelt es sich um eine selbstschneidende Schraube, bei der die Schneidzähne, die an den vorderen Enden der unterbrochenen Gewindeteile gebildet und mit Schneidkanten versehen sind, von unten nach oben nach hinten geneigt sind, relativ zu der Drehrichtung der Schraube, wodurch die Schneidzähne mit einer Schälkante versehen sind, die die Gewindeschneidfunktion erleichtert. Die Schraube kann deshalb leicht in ein Werkstück getrieben werden, wobei die relativ kleinen unterbrochenen Gewindeteile sich in das Material des Werkstückes einbetten, nachdem die Schraube eingedreht worden ist, und sich so einer zufälligen Verlagerung der Schraube durch Vibration oder andere Ursachen widersetzen. Die bekannte Schraube kann aber auch leicht wieder aus dem Werkstück herausgedreht werden, wenn gewünscht, weil die vorderen Enden der Gewindeteile bei der Rückwärtsdrehung (der Schraube aus dem Werkstück) eine Schneidwirkung entfalten gerade wie die vorderen Enden bei der Drehung im Uhrzeigersinn eine Schneidwirkung bei dem Eindrehen der Schraube entfalten. Die Fläche, die bei dem bekannten Gewindeelement durch eine Schneidkante und den Grund einer benachbarten Nut definiert ist, bildet eine Schneidfläche. Die der Schneidfläche gegenüberliegende Fläche hat bei dem Herausdrehen der Schraube genau die gleiche Wirkung wie bei dem Hineindrehen der Schraube. Es handelt sich daher bei beiden Flächen um Schneid- oder Gleitflächen.

Aus dem Dokument EP 1 323 935 A1 ist ferner eine gewindeformende Betonschraube, die sich durch niedrige Eindrehmomente auszeichnet, bekannt. Auch diese Schraube wird besonders dahingehend eingesetzt, dass die Nuten, Kerben, Rillen od. dgl. die Eigenschaften beim Eindrehen oder beim Gewindeschneidvorgang unterstützen.

Aus dem Dokument DE 89 07 705 U1 ist es bekannt, dass zur Verhinderung einer Rückdrehung von zwei ineinander eingreifenden Gewindeelementen sowohl der Gewindebereich des einen Gewindeelements als auch der des anderen Gewindeelements miteinander korrespondierende widerhakenartige Bereiche aufweisen. Das eine Gewindeelement ist ein Kunststoffteil, dessen widerhakenartige Bereiche beim Anziehen durch die widerhakenartigen Bereiche des anderen Gewindeelements ohne bleibende Verformung überwindbar sind, so dass die widerhakenartigen Bereiche im endgültigen Einbauzustand einander hintergreifen und die miteinander verschraubten Teile gegen ein Lösen sichern. Diese bekannte Rückdrehsicherung setzt voraus, dass das eine Gewindeelement mit einem entsprechend ausgebildeten anderen Gewindeelement in Eingriff gebracht wird. Eine solche Rückdrehsicherung wäre nicht geeignet, ein in ein Werkstück eingeschraubtes Gewindeelement gegen Rückdrehung zu sichern.

Aufgabe der Erfindung ist es, ein Gewindeelement der eingangs genannten Art so zu gestalten, dass ein Rückdrehen des Gewindeelementes aus einem Werkstück sicher verhindert wird.

Die Aufgabe ist ausgehend von einem Gewindeelement nach dem Oberbegriff des Patentanspruchs 1 erfindungsgemäß erstens dadurch gelöst, dass die Nuten, Kerben, Rillen od. dgl. eine Sperrfläche bilden, die eine Sperrkante aufweist, welche sich in das Werkstück einbettet, um eine Rückdrehungsicherung für das Gewindeelement zu bilden, wobei die Sperrfläche die Gewindeflanke radial und mit einer spitzen Sperrkante durchschneidet, die ins Werkstück einhakt, um die Rückdrehsicherung zu bilden.

Bei dem Gewindeelement nach der Erfindung hat die Sperrfläche die Aufgabe, mit ihrer spitzen Sperrkante beim Rückdrehen ein möglichst großes Widerstandsmoment zu bilden, um so ein Rückdrehen zu verhindern. Je geringer die Steigungsdifferenz der Nut, Kerbe, Rille od. dgl. gegenüber der Gewindesteigung ist, umso spitziger wird der Kreuzungswinkel beim durch die Nut, Kerbe, Rille od. dgl. gekreuzten Gewinde. Die Steigung der Nut, Kerbe, Rille od. dgl. ist so ausgelegt, dass die auf die spitze Sperrkante wirkenden Kräfte an der Gewindeflanke aufgenommen werden können und dies beim Rückdrehen erfindungsgemäß zu einer Sperrwirkung führt. Die Form der Nut, Kerbe, Rille od. dgl. kann unsymmetrisch gewählt werden, so dass die Sperrfläche den Gewindegang beinnahe rechtwinklig schneidet und die Gleitfläche in einem möglichst stumpfen Winkel und mit einer abgerundeten Kante in die Gewindeflanken übergeht. Ein Rückdrehen wird erfindungsgemäß also durch die Form des Gewindes selbst verhindert. Auf den Einsatz von Kleber, Beschichtung od. dgl. und auf weitere Elemente zur Rückdrehsicherung wie Unterlagsscheiben usw. kann somit verzichtet werden.

Eine weitere Sicherung gegen Rückdrehen ergibt sich erfindungsgemäß zweitens dadurch, dass durch die Nuten, Kerben, Rillen od. dgl. bei deren in einem Umformvorgang erfolgender Herstellung verdrängtes Material größtenteils in dem verbleibenden Gewinde aufgeformt und dadurch der Außendurchmesser des verbleibenden Gewindes gegenüber dem Außendurchmesser des noch nicht mit Nuten, Kerben, Rillen od. dgl. versehenen Gewindes entsprechend erhöht ist. Durch ein geeignetes Umformverfahren wird erreicht, dass das durch die Nuten, Kerben, Rillen od. dgl. verdrängte Material in den Gewindegang gedrückt wird. Idealerweise wird das umgeformte Material bis in die Spitze der Gewindeflanke aufgestaucht. Dies führt dazu, dass der Gewindeaußendurchmesser erhöht wird und somit eine erhöhte Flächenpressung zwischen dem Gewindeelement und dem Gegengewinde zu einer Klemmwirkung führt. Besonders ausgeprägt zeigt sich die Wirkung, wenn die Sperrfläche in der Nähe des größten Außendurchmessers aufgestaucht ist, da dort das Sperrmoment die größte Sperrwirkung aufgrund des Hebelgesetzes aufweist. Die Sperrwirkung kann noch gesteigert werden, indem die Nut, Kerbe, Rille od. dgl. breit ausgelegt wird, so dass der Gewindeaußendurchmesser auf einer möglichst maximalen Länge am Umfang unterbrochen ist.

In einer Ausgestaltung des Gewindeelements nach der Erfindung ist die Nut, Kerbe, Rille od. dgl. bis nahe an den Gewindekerndurchmesser oder tiefer ausgebildet. Durch die Tiefe der Nut, Kerbe, Rille od. dgl. wird die Kante zwischen Sperrfläche und Gewindeflanke bestimmt. Je tiefer die Nut, Kerbe, Rille od. dgl. ausgebildet ist, umso länger ist diese Kante. Je länger die Sperrkante ist, umso größer wird die Sperrwirkung gegen ein Rückdrehen. Wird die Nut, Kerbe, Rille od. dgl. tiefer als der Kerndurchmesser ausgestaltet, erhöht sich die Sperrwirkung nur noch gering, da das Gegengewinde höchstens bis zum Kerndurchmesser in Kontakt mit der Gewindeflanke ist.

In diesem Zusammenhang ist es in einer weiteren Ausgestaltung des Gewindeelements nach der Erfindung möglich, dass an das Gewinde mit den Nuten, Kerben, Rillen od. dgl. ein zweiter Gewindeabschnitt mit einem einlaufenden, ununterbrochenen Gewinde mit gleicher Steigung anschließt. Ununterbrochene Gewinde zeichnen sich durch ein geringeres Eindrehmoment aus, was die Eindrehkräfte reduziert. Dieser zweite Gewindeabschnitt kann auch aus einem einlaufenden und einem voll ausgeformten Gewindeteil bestehen. Es lässt sich so die gewünschte Sperrkraft innerhalb der mechanischen Gesetze beliebig variieren. Wird das Gewinde nicht voll ausgeformt und damit der Gewindeaußendurchmesser in diesem zweiten Gewindeabschnitt etwas reduziert, wird die Sperrkraft höher, als wenn der zweite Gewindeabschnitt eine voll ausgeformte Gewindeflanke mit einem größeren Gewindeaußendurchmesser, aufweist. Das Gewindeelement wird zudem bevorzugt in schraubenähnlichen Befestigungselementen eingesetzt. Es bildet in diesem Fall neben dem Schraubenkopf, dem Gewindeteil und allenfalls einem Bohrteil das für die Rückdrehsicherung zuständige Element.

In einer weiteren vorteilhaften Ausgestaltung des erfindungsgemäßen Gewindeelementes ist das Gewinde selbstformend, selbstschneidend od. dgl. Diese Ausgestaltung lässt sich auf alle bekannten, auch unrunde, Gewindeformen anwenden. So sind besonders selbstformende, selbstschneidende Gewindearten od. dgl. dafür geeignet.

Ausführungsbeispiele der Erfindung werden im Folgenden unter Bezugnahme auf die Zeichnungen näher erläutert. Es zeigen:
- Fig. 1: ein Gewindeelement mit Rückdrehsicherung mittels einer das Gewinde kreuzenden Nut;
- Fig. 2: ein Gewindeelement mit Rückdrehsicherung mittels einer das Gewinde kreuzenden Nut in 3D-Darstellung;
- Fig. 3: ein in ein Werkstück eingeformtes Gewindeelement; und
- Fig. 4: ein Gewindeelement mit anschließendem Gewindeteil.

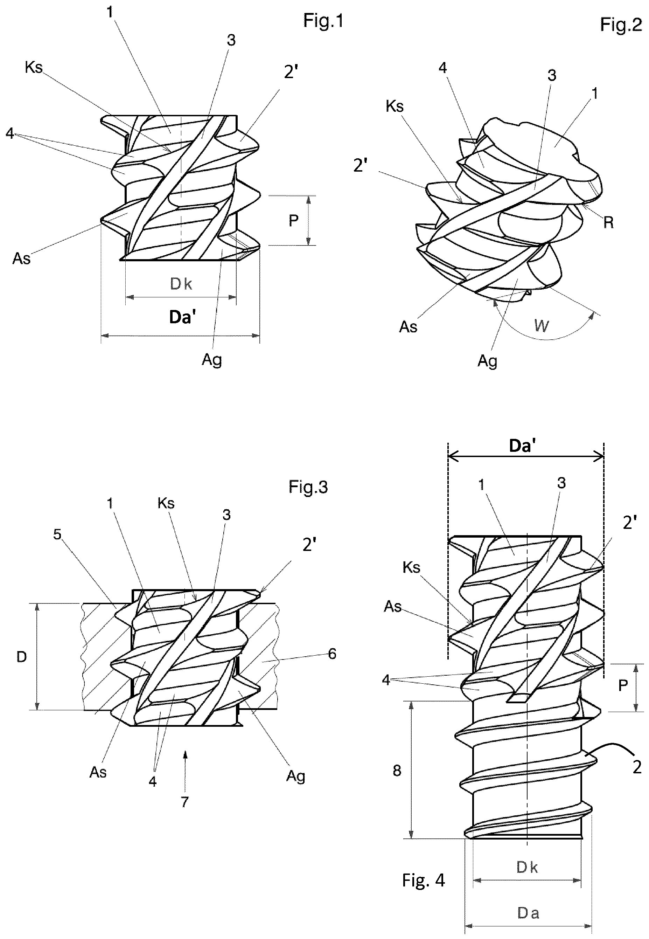

Ein in den Fig. 1 und 2 dargestelltes Gewindeelement 1 mit mindestens zwei das Gewinde 2' kreuzenden Nuten, Kerben, Rillen 3 od. dgl. weist Nuten, Kerben, Rillen 3 od. dgl. auf, die gegenüber dem Gewinde 2' durch ihre Form eine scharfe, in ein Werkstück 6 (Fig. 3) einhakende Sperrkante Ks an den Gewindeflanken 4 bilden, die beim Kreuzen des Gewindes 2 als Rückdrehsicherung wirkt, und maximal die 25-fache Steigung P, mit gleicher Drehrichtung, besitzen. Die das Gewinde 2' kreuzende Nut, Kerbe, Rille 3 od. dgl. bildet in der Gewindeflanke 4 eine Gleitfläche Ag und eine Sperrfläche As. Durch die Form der Nut, Kerbe, Rille 3 od. dgl., die auch unsymmetrisch sein kann, unterstützt die Gleitfläche Ag das Eingewinden, indem diese Gleitfläche Ag in einem stumpfen Winkel W und mit einem Radius R in die Gewindeflanke 4 übergeht. Die Sperrfläche As auf der Gegenseite hingegen wird so ausgelegt, dass die Sperrfläche As möglichst radial die Gewindeflanken 4 und mit einer möglichst spitzen Kante durchschneidet. Je nach gewünschter Sperrwirkung kann aber auch jede beliebige andere Form der Nut, Kerbe, Rille 3 od. dgl. angebracht werden. Die Sperrwirkung kann noch erhöht werden, indem die Gewindeflanke 4 am Gewindeaußendurchmesser Da' durch die Nut, Kerbe, Rille 3 od. dgl. möglichst weit unterbrochen ist. Damit wird durch die elastische Verformung an einem Gegengewinde 5 in dem Werkstück 6 bewirkt, dass der Durchmesser geringfügig schrumpft und beim Auftreffen der Sperrfläche As zuerst wieder um den elastischen Bereich nach außen gedrückt werden muss. Ein erfindungsgemäßes Gewindeelement 1 mit einem Gewindeaußendurchmesser Da' von ungefähr 5 Millimeter weist typischerweise eine Steigung um 1,8 Millimeter im Gewinde auf. Wird die Nut, Kerbe, Rille 3 od. dgl. nun mit einer Steigung versehen, die geringer als 45 Millimeter ist, erfüllen die daraus resultierenden Schnittflächen mit dem Gewinde 2 die Bedingungen, um eine Sperrwirkung durch das Gewinde zu erreichen. Vorteilhaft wird ein Steigungsverhältnis von maximal 15 verwendet, was maximal 27 Millimetern entspricht. Typischerweise ist das Steigungsverhältnis sogar zwischen 5 und 10, so dass eine Steigung von maximal 18 Millimeter verwendet wird. Je geringer das Steigungsverhältnis ist, umso spitzwinkliger wird das Gewinde 2' durch die Nut, Kerbe, Rille 3 od. dgl. geschnitten und die Sperrkante entsprechend länger, was zu einer erhöhten Sperrwirkung führt.

Dabei ist die Nut, Kerbe, Rille 3 od. dgl. bis nahe an den Gewindekerndurchmesser Dₖ oder tiefer ausgebildet. Die Sperrfläche As schneidet die Gewindeflanke 4 nun auf einer maximalen Länge und bildet somit eine lange Sperrkante Ks. Wird die Nut, Kerbe, Rille 3 od. dgl. noch tiefer ausgeformt, so wird die Wirkung nur noch unwesentlich erhöht, da das Gegengewinde 5 einen größeren Durchmesser als den Gewindekerndurchmesser Dk des Gewindeelementes 1 aufweisen muss.

Das durch die Nuten, Kerben, Rillen 3 od. dgl. verdrängte Material ist größtenteils in dem verbleibenden Gewinde 2' aufgeformt, so dass der Gewindeaußendurchmesser Da' größer ist als der Außendurchmesser Da bei einem gleichen Gewinde 2 ohne Nuten, Kerben, Rillen 3 od. dgl. (Figur 4). Durch einen optimalen Umformvorgang kann beim Walzen das durch die Nut, Kerbe, Rille 3 od. dgl. verdrängte Material in das restliche Gewinde fließen. Die Gewindeflanke 4 wird dadurch besonders in der Nähe der Sperrkante Ks besser ausgeformt. Der Gewindeaußendurchmesser Da' ist entsprechend geringfügig erhöht und verhindert mit der Sperrkante Ks das Rückdrehen. Insbesondere bei einer unsymmetrisch angeordneten Nut, Kerbe, Rille 3 od. dgl. kann dieser Effekt noch besser erreicht werden.

Ein erfindungsgemäßes Gewindeelement 1 ist besonders geeignet, ein selbstformendes, selbstschneidendes Gewinde od. dgl. aufzuweisen. Die Sperrwirkung lässt sich ohne Einschränkungen besonders gut mit selbstformenden, selbstschneidenden Gewindeausführungen od. dgl. kombinieren.

In der Ausführungsvariante gemäß Fig. 3 entspricht die axiale Länge des Gewindes 2' mit Nuten, Kerben, Rillen 3 od. dgl. zumindest annähernd der Dicke D des Werkstückes 6, in welches das Gewinde 2' einzusetzen ist. Damit die Sperrwirkung des Gewindeelementes 1 seine Wirkung erzeugen kann, muss dieses in das Gegengewinde 5 eingedreht werden. Eine maximale Wirkung wird dann erreicht, wenn die Nuten, Kerben, Rillen 3 od. dgl. annähernd über die gesamte Dicke D des Werkstückes 6 mit dem Gegengewinde 5 angebracht sind.

Es reicht aber vollends aus, wenn das Gewindeelement 1 an der Stelle eingesetzt wird, an der das Gegengewinde 5 in gesetztem Zustand eingreift. So reicht es durchaus aus, bei der Befestigung von mehreren Elementen nur im Bereich des im Gewinde eingreifenden Elementes mit dem Gegengewinde 5 das Gewindeelement 1 einzusetzen.

Beim Einsatz von dünnen Blechen als Werkstück 6 ist es durchaus sinnvoll, die Nut, Kerbe, Rille 3 od. dgl. über eine geringfügig größere Länge anzubringen, da sich das Blech bei der Bohrung 7 leicht verformen kann und so die absolute Position nicht mehr genau gegeben ist.

In einer weiteren Ausführungsvariante zeigt Fig. 4, dass sich an das Gewinde 2' mit den Nuten, Kerben, Rillen 3 od. dgl. ein zweiter Gewindeabschnitt 8 mit einem einlaufenden, ununterbrochenen Gewinde 2 mit gleicher Steigung P anschließt. In solchen Kombinationen lässt sich das erfindungsgemäße Gewindeelement 1 z.B. in einem schraubenartigen Verbindungselement in Kombination mit einem Schraubenkopf, weiteren Gewindeelementen mit der gleichen Gewindesteigung P, einem Bohrelement und weiteren Elementen einsetzen. Die Position des erfindungsgemäßen Gewindeelementes 1 lässt sich so exakt an die Anforderungen, insbesondere der Einbaulage, anpassen.

## Patentansprüche

1. Gewindeelement (1) mit mindestens zwei das Gewinde (2') kreuzenden Nuten, Kerben, Rillen od. dgl., wobei die Nuten, Kerben, Rillen (3) od. dgl. in der Gewindeflanke (4) wenigstens eine Gleitfläche (Ag) bilden, die in einem stumpfen Winkel (W) in die Gewindeflanke (4) übergeht, und wobei die Nuten, Kerben, Rillen (3) od. dgl. gegenüber dem Gewinde (2') maximal die 25-fache Steigung, mit gleicher Drehrichtung, besitzen,
**dadurch gekennzeichnet, dass** die Nuten, Kerben, Rillen (3) od. dgl. eine Sperrfläche (As) bilden, die eine Sperrkante (Ks) aufweist, welche sich in das Werkstück (6) einbettet, um eine Rückdrehungsicherung für das Gewindeelement (1) zu bilden, wobei die Sperrfläche (As) die Gewindeflanke (4) radial und mit einer spitzen Sperrkante (Ks) durchschneidet, die in das Werkstück (6) einhakt, um die Rückdrehsicherung zu bilden, und dass durch die Nuten, Kerben, Rillen (3) od. dgl. bei deren in einem Umformvorgang erfolgender Herstellung verdrängtes Material größtenteils in dem verbleibenden Gewinde (2') aufgeformt und dadurch der Außendurchmesser (Da') des verbleibenden Gewindes (2') gegenüber dem Außendurchmesser (Da) des noch nicht mit Nuten, Kerben, Rillen (3) od. dgl. versehenen Gewindes (2) entsprechend erhöht ist.

2. Gewindeelement nach Anspruch 1, **dadurch gekennzeichnet, dass** die Nut, Kerbe, Rille (3) od. dgl. bis nahe an den Gewindekerndurchmesser (Dk) oder tiefer ausgebildet ist.

3. Gewindeelement nach Anspruch 1 oder 2, **dadurch gekennzeichnet, dass** an das Gewinde (2') mit den Nuten, Kerben, Rillen (3) od. dgl. ein zweiter Gewindeabschnitt (8) mit einem einlaufenden, ununterbrochenen Gewinde (2) mit gleicher Steigung anschließt.

4. Gewindeelement nach einem der Ansprüche 1 bis 3 **dadurch gekennzeichnet, dass** das Gewinde (2) selbstformend, selbstschneidend od. dgl. ist.

## Claims

1. A threaded element (1), comprising at least two grooves, notches, slots or the like intersecting the thread (2'), the grooves, notches, slots (3) or the like forming in the thread flank (4) at least one gliding surface (Ag) that transitions into the thread flank (4) at an obtuse angle (W), and wherein the grooves, notches, slots (3) or the like have no more than 25-times the pitch with respect to the thread (2') and have the same rotational direction,
**characterized in that** the grooves, notches, slots (3) or the like form a blocking surface (As) having a blocking edge (Ks) adapted to be embedded in the work piece (6) so as to form a protection against reverse rotation for the thread element (1), wherein the blocking surface (As) radially intersects the thread flank (4) with a sharp blocking edge (Ks) which hooks into the workpiece (6) so as to form the protection against reverse rotation, and that material displaced by a forming process during manufacturing of the grooves, notches slots (3) and the like is formed to a great extent onto the remaining thread (2') whereby the exterior diameter (Da') of the remaining thread (2') is correspondingly increased with respect to the exterior diameter (Da) of the thread (2) that is not yet provided with grooves, notches slots (3) or the like.

2. The threaded element according to claim 1, **characterized in that** the groove, notch, slot (3) or the like is formed to a depth almost reaching the core thread diameter (Dk) or deeper.

3. The threaded element according to claim 1 or 2, **characterized in that** the thread (2') with the grooves, notches, slots (3) or the like is followed by a second threaded section (8) having an incoming uninterrupted thread (2) with the same pitch.

4. The threaded element according to any one of claims 1 to 3, **characterized in that** the thread (2) is self-forming or self-cutting or the like.

## Revendications

1. Élément fileté (1) avec au moins deux rainures, entailles, cannelures ou similaires croisant le filetage (2'), les rainures, entailles, cannelures (3) ou similaires formant dans le flanc du filetage (4) au moins une surface de glissement (Ag), qui passe dans un angle obtus (W) dans le flanc du filetage (4) et les rainures, entailles, cannelures (3) ou similaires occupant par rapport au filetage (2') au maximum 25 fois le pas, avec sens de rotation identique,
**caractérisé en ce que** les rainures, entailles, cannelures (3) ou similaires forment une surface d'arrêt (As) qui comporte une arête d'arrêt (Ks) qui s'incorpore dans la pièce d'oeuvre (6) pour former un blocage anti-rotation arrière pour l'élément fileté (1), la surface d'arrêt (As) recoupant le flanc du filetage (4) en direction radiale et avec une arête d'arrêt (Ks) pointue qui s'accroche dans la pièce d'oeuvre (6) pour former le blocage anti-rotation arrière et **en ce que** la matière refoulée par les rainures, entailles, cannelures (3) ou similaires lors de leur fabrication s'effectuant en un processus de déformation est surmoulée en majeure partie dans le filetage (2') restant et de ce fait la diamètre extérieur (Da') du filetage (2') restant est augmenté en conséquence par rapport au diamètre extérieur (Da) du filetage (2) non encore muni de rainures, entailles, cannelures (3) ou similaires.

2. Élément fileté selon la revendication 1, **caractérisé en ce que** la rainure, entaille, cannelure (3) ou similaire est conçue jusqu'à proximité du diamètre de l'âme du filetage (Dk) ou plus profondément.

3. Élément fileté selon la revendication 1 ou 2, **caractérisé en ce que** sur le filetage (2') avec les rainures, entailles, cannelures (3) ou similaires se raccorde un deuxième tronçon fileté (8) avec un filetage (2) ininterrompu entrant de pas identique.

4. Élément fileté selon l'une quelconque des revendications 1 à 3 **caractérisé en ce que** le filetage (2) est autoformant, autotaraudeur ou similaire.
